# EUROPÄISCHE PATENTANMELDUNG

(11) **EP 4 763 551 A1**
(43) Veröffentlichungstag der Anmeldung: **24.06.2026**
(21) Anmeldenummer: 25210512.7
(22) Anmeldetag: 22.10.2025
(51) Int. Cl.: B60H 1/28, B62D 25/08, B60K 11/02, B60S 1/50

(54) **KRAFTFAHRZEUG MIT EINEM WASSERKASTEN UND EINEM DURCH DEN WASSERKASTEN HINDURCH ZUGÄNGLICHEN FLUIDBEHÄLTER**

(30) Priorität: 19.12.2024 DE 102024138827
(71) Anmelder: AUDI AG, 85057 Ingolstadt (DE)
(72) Erfinder: Albl, Sebastian, 01689 Weinböhla (DE); Welz, Stefan, 85051 Ingolstadt (DE)

(57) **Zusammenfassung**

Beschrieben wird ein Kraftfahrzeug (10) mit einem verbrennungsmotorischen oder/und elektrischen Antrieb, wobei das Kraftfahrzeug aufweist: eine Windschutzscheibe (12); einen vor der Windschutzscheibe (12) angeordneten Wasserkasten (16), der dazu eingerichtet ist, in einem Übergangsbereich von der Windschutzscheibe (12) und einer Fronthaube anfallendes Wasser aufzufangen und abzuleiten; wobei der Wasserkasten (16) ein Bodenelement (18) und ein Deckelelement (20) aufweist, die einen Ansaugraum (22) für Frischluft (FL) bilden; wobei das Deckelelement (20) oder/und das Bodenelement (18) eine entlang der Windschutzscheibe (12) verlaufende Schwallwand (24) aufweist oder anteilig bildet mit einem zur Windschutz-scheibe (12) zugewandten Schwallwandkanal zur Ableitung von Wasser zu beiden Seiten des Kraftfahrzeugs; wobei in dem Deckelelement (20) eine Ansaugöffnung (26) für Frischluft (FL) ausgebildet ist, und
wobei in dem Bodenelement (18) ein Wasserauffangbecken mit einer Bodenfläche (18f) ausgebildet ist. Dabei ist vorgesehen, dass unterhalb des Deckelelements (20) ein Fluidbehälter (30) mit einem in den Ansaugraum (22) des Wasserkastens (16) vorstehenden Einfüllabschnitt (32) angeordnet ist und dass in dem Deckelelement (20) eine Zugangsöffnung (34) zu dem Einfüllabschnitt (32) des Fluidbehälters (30) ausgebildet ist.

## Beschreibung

Die Erfindung betrifft ein Kraftfahrzeug mit einem verbrennungsmotorischen oder/und elektrischen Antrieb, wobei das Kraftfahrzeug aufweist: eine Windschutzscheibe; einen vor der Windschutzscheibe angeordneten Wasserkasten, der dazu eingerichtet ist, in einem Übergangsbereich von der Windschutzscheibe und einer Fronthaube anfallendes Wasser aufzufangen und abzuleiten; wobei der Wasserkasten ein Bodenelement und ein Deckelelement aufweist, die einen Ansaugraum für Frischluft bilden; wobei das Deckelement oder/und das Bodenelement eine entlang der Windschutzscheibe verlaufende Schwallwand aufweist oder anteilig bildet mit einem zur Windschutzscheibe zu-gewandten Schwallwandkanal zur Ableitung von Wasser zu beiden Seiten des Kraftfahrzeugs; wobei in dem Deckelelement eine Ansaugöffnung für Frischluft ausgebildet ist, und wobei in dem Bodenelement ein Wasserauffangbecken mit einer Bodenfläche ausgebildet ist.

Ein solches Kraftfahrzeug mit Wasserkasten ist beispielsweise in der von der gleichen Anmelderin eingereichten früheren Anmeldung 10 2024 108 414 beschrieben. Ferner wird noch auf die DE 195 46 085 C1 und die DE 10 2018 201 866 A1 hingewiesen.

Bislang hatten bekannte Kraftfahrzeuge ein ausreichend großes Prestigemaß, um einen hinsichtlich Durchströmungsparametern geeigneten Frischluftweg bereitstellen zu können. Der Frischluftweg wird dabei insbesondere mittels der Bauteile Schottwände (Wasserkasten-Boden, Wasserkasten-Vorderwand, Wasserkasten-Abdeckung), Stirnwand zwischen Innenraum und Motorraum und Federbeinaufnahmen definiert. Dabei soll die Frischluft in Breitenrichtung des Kraftfahrzeugs durch den in Höhenrichtung tiefen, zerklüfteten Wasserkasten nach außen (zur Seite hin) zu einem Frischlufteinlass des Klimagerätes bzw. der Klimatisierungseinheit strömen, um eine maximale Wasserabscheidung zu ermöglichen. Die Klimatisierungseinheit ist insbesondere lenkungsabhängig auf der Beifahrerseite angeordnet, wobei der Frischluftweg ebenfalls lenkungsspezifisch von der Fahrer- zur Beifahrerseite ausgeführt ist. Bei bekannten Wasserkästen hat sich gezeigt, dass durch die Ansaugöffnung in der Wasserkastenabdeckung (Deckelelement) sehr viel Wasser aufgenommen wird, das erst innerhalb des Wasserkastens abgeschieden wird.

Durch das sogenannte Cab-forward-Design für ein vergrößertes Innenraumvolumen und Anforderungen bezüglich einer flachen Fronthaube ist eine Luftstrecke mit ausreichend guten Durchströmungsparametern und Wasserabscheidung insbesondere in der bisherigen Längs- und Höhen-Ausdehnung nicht mehr möglich. Ferner sind durch den Wasserkasten auch oftmals Fluidbehälter, wie beispielsweise Ausgleichsbehälter für Kühlwasser oder für Bremsflüssigkeit, abgedeckt bzw. schlecht zugänglich.

Die der Erfindung zu Grunde liegende Aufgabe wird darin gesehen, ein Kraftfahrzeug mit Wasserkasten anzugeben, bei dem die obigen Nachteile vermieden werden können, wobei bei geringem Raumangebot eine zuverlässige Wasserabscheidung und eine verbesserte Zugänglichkeit zu Fluidbehältern bereitgestellt werden soll.

Diese Aufgabe wird gelöst durch ein Kraftfahrzeug mit den Merkmalen des unabhängigen Patentanspruchs. Vorteilhafte Ausgestaltungen mit zweckmäßigen Weiterbildungen sind in den abhängigen Patentansprüchen angegeben.

Vorgeschlagen wird also ein Kraftfahrzeug mit einem verbrennungsmotorischen oder/und elektrischen Antrieb, wobei das Kraftfahrzeug aufweist: eine Windschutzscheibe; einen vor der Windschutzscheibe angeordneten Wasserkasten, der dazu eingerichtet ist, in einem Übergangsbereich von der Windschutzscheibe und einer Fronthaube anfallendes Wasser aufzufangen und abzuleiten; wobei der Wasserkasten ein Bodenelement und ein Deckelelement aufweist, die einen Ansaugraum für Frischluft bilden; wobei das Deckelelement oder/und das Bodenelement eine entlang der Windschutzscheibe verlaufende Schwallwand aufweist oder anteilig bildet mit einem zur Windschutzscheibe zugewandten Schwallwandkanal zur Ableitung von Wasser zu beiden Seiten des Kraftfahrzeugs; wobei in dem Deckelelement eine Ansaugöffnung für Frischluft ausgebildet ist, und wobei in dem Bodenelement ein Wasserauffangbecken mit einer Bodenfläche ausgebildet ist. Dabei ist vorgesehen, dass unterhalb des Deckelelements ein Fluidbehälter mit einem in den Ansaugraum des Wasserkastens vorstehenden Einfüllabschnitt angeordnet ist und dass in dem Deckelelement eine Zugangsöffnung zu dem Einfüllabschnitt des Fluidbehälters ausgebildet ist.

Hierdurch kann der zur Verfügung stehende Bauraum optimal ausgenutzt werden und der Zugang zu einem Fluidbehälter, insbesondere zu dessen Einfüllabschnitt ist so ermöglicht, dass ein Ausbauen des Wasserkastens vermieden werden kann.

Bei dem Kraftfahrzeug kann der Fluidbehälter an einer Oberseite des Einfüllabschnitts eine Einfüllöffnung oder einen Einfülladapter aufweisen, die bzw. der durch die Zugangsöffnung Deckelelements hindurch erreichbar ist. Hierdurch ist es möglich, einen Füllstutzen einer Befüllvorrichtung mit der Einfüllöffnung bzw. dem Einfülladapter zu verbinden, um das Fluid bedarfsweise aufzufüllen oder ggf. auch abzusaugen bzw. zu entnehmen und ggf. den Füllstand manuell zu sichten.

Bei dem Kraftfahrzeug kann das Bodenelement im Bereich des Einfüllabschnitts Wandabschnitte aufweisen, die den Einfüllabschnitt zumindest teilweise umgeben oder einfassen. Hierdurch kann in dem Ansaugraum eine Struktur gebildet werden, um die herum das Strömen von Luft ermöglicht ist, ohne dass die Luft in Richtung des Einfüllabschnitts bzw. des Fluidbehälters aus dem Ansaugraum entweicht.

Bei dem Kraftfahrzeug können die Wandabschnitte einstückig mit dem Bodenelement ausgebildet sein und eine Innenkontur bilden, die mit einer Außenkontur des Einfüllabschnitts im Wesentlichen korrespondiert. Insbesondere ist eine Art formschlüssige Aufnahme des Einfüllabschnitt in dem Bodenelement bzw. den Wandabschnitte ermöglicht.

Bei dem Kraftfahrzeug kann die Zugangsöffnung durch ein abnehmbares Abdeckelement verschließbar sein. Hierdurch wird der Ansaugraum zuverlässig und im Wesentlichen dicht verschlossen, wobei der Zugang zu der Einfüllöffnung bzw. dem Einfülladapter jederzeit möglich ist. Das Abdeckelement kann insbesondere auch über eine Art Scharnier oder Lasche beweglich mit dem Deckelelement verbunden sein, so dass das Abdeckelement nicht verloren werden kann.

Bei dem Kraftfahrzeug kann zwischen dem Bodenelement, insbesondere den Wandabschnitten, und dem Deckelelement eine im Wesentlichen ringförmige Wandung ausgebildet sein, derart, dass den Ansaugraum durchströmende Luft zwischen dem Bodenelement und dem Deckelelement um die ringförmig Wandung geleitet wird. Hierdurch kann in dem Ansaugraum eine Struktur gebildet werden, um die herum das Strömen von Luft ermöglicht ist, ohne dass die Luft in Richtung des Einfüllabschnitts bzw. des Fluidbehälters aus dem Ansaugraum entweicht.

Bei dem Kraftfahrzeug kann die ringförmige Wandung in Bezug auf ihr Material oder/und in Bezug auf ihre Wandstärke nachgiebig ausgebildet sein. Hierdurch wird sichergestellt, dass ein ausreichender Schutz ermöglicht ist für den Fall eines Aufpralls insbesondere eines Fußgängers.

Bei dem Kraftfahrzeug kann die ringförmige Wandung materialschlüssig mit dem Bodenelement verbunden sein oder einstückig mit diesem ausgebildet sein. Anders ausgedrückt können das Bodenelement und die ringförmige Wandung aus dem gleichen Material hergestellt sein, beispielsweise als Spritzguss-Bauteil aus einem Kunststoff. Es ist aber auch denkbar, dass die ringförmige Wandung aus einem weicheren Material hergestellt ist als das Bodenelement. Hierdurch kann in einem Kontaktbereich von ringförmiger Wandung und Deckelelement eine verbesserte Dichtigkeit ermöglicht werden. Denkbar ist auch, dass die ringförmige Wandung zwischen dem Deckelelement und dem Bodenelement leicht komprimiert wird.

Bei dem Kraftfahrzeug kann die Ansaugöffnung im Deckelelement bezogen auf eine Fahrzeugbreite im Wesentlichen mittig angeordnet sein, und die Zugangsöffnung kann angrenzend an die Ansaugöffnung ausgebildet sein, wobei zwischen der Ansaugöffnung und der Zugangsöffnung ein Abstandabschnitt des Deckelelements ausgebildet ist, der bezogen auf eine Fahrzeugbreitenrichtung eine Ausdehnung von weniger als 20cm, insbesondere weniger als 5cm aufweist. Anders ausgedrückt können die Ansaugöffnung und die Zugangsöffnung sehr nahe beieinander liegen, wobei auch eine Ausdehnung des Abstandsabschnitts von wenigen Millimetern bis etwa 3cm denkbar ist.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: vereinfacht und schematische eine Draufsicht auf einen vorderen Teilbereich eines Kraftfahrzeugs mit Windschutzschiebe und Wasserkasten;
- Fig. 2: vereinfacht und schematische eine Perspektivansicht auf einen vorderen Teilbereich eines Kraftfahrzeugs mit Windschutzschiebe und Wasserkasten;
- Fig. 3: vereinfacht und schematische eine Schnittansicht etwa entsprechend der Schnittlinie III-III der Fig. 1A.

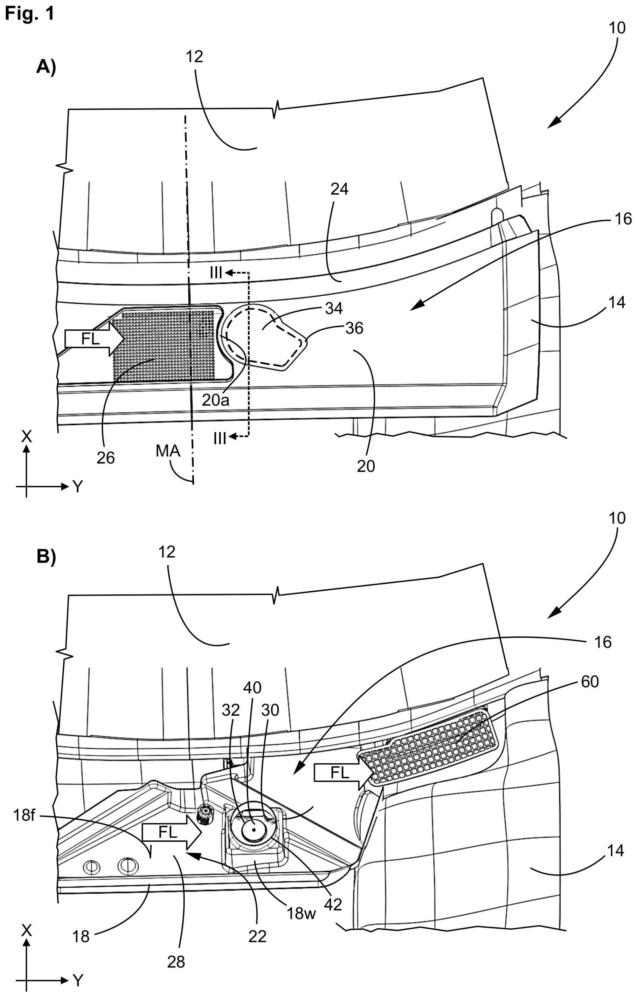

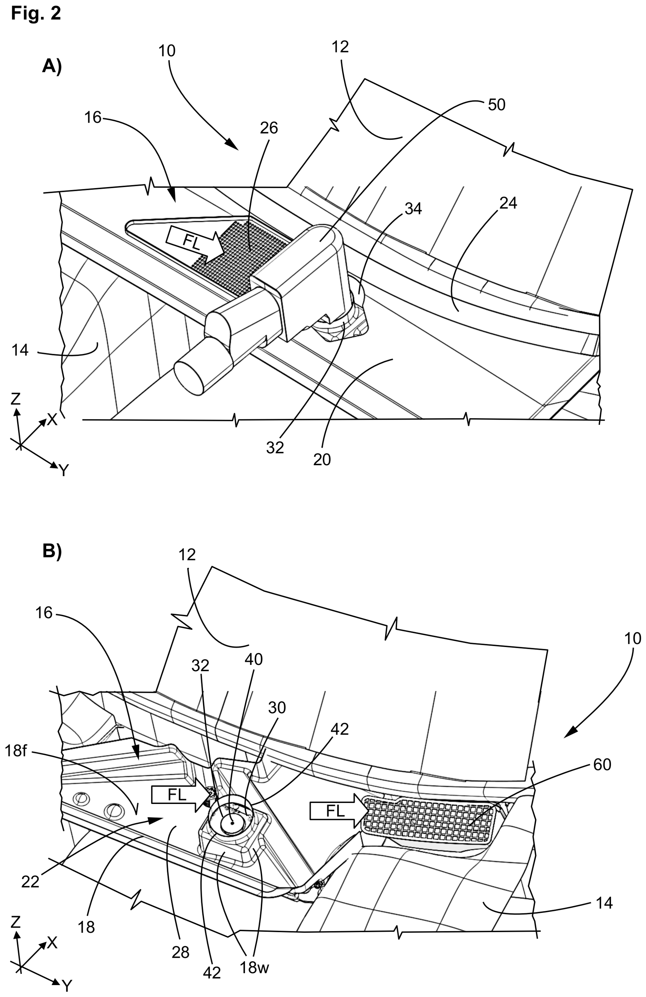

Nachfolgend wird unter gleichzeitiger Bezugnahme auf die Fig. 1 und 2 ein Beispiel eines Kraftfahrzeugs 10 mit einem Wasserkasten beschrieben. In den Fig. 1 und 2 ist das Kraftfahrzeug 10 insbesondere repräsentiert durch seine teilweise dargestellte Frontscheibe bzw. Windschutzscheibe 12 und lediglich durch gitterartig angedeutete Karosserieteile 14.

Das Kraftfahrzeug weist einen vor der Windschutzscheibe 12 angeordneten Wasserkasten 16 auf, der dazu eingerichtet ist, in einem Übergangsbereich von der Windschutzscheibe 12 und einer nicht dargestellten Fronthaube anfallendes Wasser aufzufangen und abzuleiten.

Der Wasserkasten 16 weist ein Bodenelement 18 auf, das insbesondere bei B) in den Fig. 1 und 2 ersichtlich ist. Ferner weist der Wasserkasten 16 ein Deckelelement 20 auf, das insbesondere jeweils bei A) in den Fig. 1 und 2 gezeigt ist. Das Deckelelement 20 ist auf dem Bodenelement 18 angeordnet und zwischen ihnen wird ein Ansaugraum 22 für Frischluft gebildet, die jeweils bei B) in den Fig. 1 und 2 ersichtlich ist, bei in diesen Darstellungen abgenommenem Deckelelement 20.

Das Deckelelement 20 weist in diesem Beispiel eine entlang der Windschutzscheibe 12 verlaufende Schwallwand 24 auf mit einem zur Windschutzscheibe 12 zu-gewandten Schwallwandkanal zur Ableitung von Wasser zu beiden Seiten des Kraftfahrzeugs 10. Es wird darauf hingewiesen, dass eine Schwallwand auch an dem Bodenelement 18 vorgesehen bzw. ausgebildet sein kann. Ferner ist es auch möglich, dass die Schwallwand gemeinsam durch das Deckelelement 20 und das Bodenelement 18 gebildet wird, wobei das Deckelelement 20 und das Bodenelement 18 jeweils einen Teil oder Abschnitt der Schwallwand aufweisen. Ferner ist in dem Deckelelement 20 eine Ansaugöffnung 26 für Frischluft FL ausgebildet. In dem Bodenelement 18 ist ein Wasserauffangbecken 28 mit einer Bodenfläche 28f ausgebildet.

Bei dem Kraftfahrzeug 10 ist unterhalb des Deckelelements 20 ein Fluidbehälter 30 mit einem in den Ansaugraum 22 des Wasserkastens 14 vorstehenden Einfüllabschnitt 32 angeordnet. In dem Deckelelement 20 ist eine Zugangsöffnung 34 zu dem Einfüllabschnitt 32 des Fluidbehälters 30 ausgebildet.

In der Fig. 1 ist bei A) ersichtlich, dass die Zugangsöffnung 34 durch ein abnehmbares Abdeckelement 36 verschließbar ist.

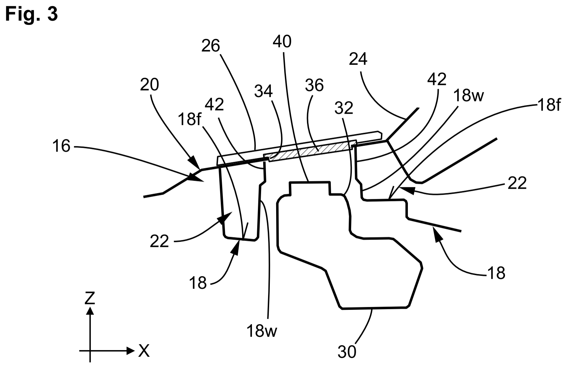

Die weitere Beschreibung bezieht nun auch auf eine vereinfachte und schematische Schnittansicht der Fig. 3 ein, die etwa einer Schnittlinie III-III der Fig. 1A entspricht. Die in der Fig. 3 dargestellten Bezugszeichen sind die gleichen, wie in den zuvor beschriebenen Fig. 1 und 2, so dass die obigen Erläuterungen auch für die Fig. 3 herangezogen werden können.

Der Fluidbehälter 30 weist an einer Oberseite des Einfüllabschnitts 32 eine Einfüllöffnung 40 oder einen Einfülladapter auf, die bzw. der durch die Zugangsöffnung 34 Deckelelements 30 hindurch erreichbar ist.

Aus der Fig. 3 sowie jeweils bei B) in den Fig. 1 und 2 ist ersichtlich, dass das Bodenelement 18 im Bereich des Einfüllabschnitts 32 Wandabschnitte 18w aufweist, die den Einfüllabschnitt 32 zumindest teilweise umgeben oder einfassen. Dabei können die Wandabschnitte 18w einstückig mit dem Bodenelement 18 ausgebildet sein und eine Innenkontur bilden, die mit einer Außenkontur des Einfüllabschnitts 32 im Wesentlichen korrespondiert.

Ferner ist aus der Fig. 1 und jeweils bei B) in den Fig. 1 und 2 ersichtlich, dass zwischen dem Bodenelement 18, insbesondere den Wandabschnitten 18w, und dem Deckelelement 20 eine im Wesentlichen ringförmige Wandung 42 ausgebildet ist, derart, dass den Ansaugraum 22 durchströmende Luft FL zwischen dem Bodenelement 18 und dem Deckelelement 20 um die ringförmig Wandung 42 geleitet wird.

Die ringförmige Wandung 42 ist in Bezug auf ihr Material oder/und in Bezug auf ihre Wandstärke nachgiebig ausgebildet. Die Nachgiebigkeit der ringförmigen Wandung 42 dient insbesondere dazu, einen passiven Schutz zu bieten für den Fall eines Anpralls, insbesondere eines Fußgänger, an dem Kraftfahrzeug 10, insbesondere auf dessen Fronthaube.

Die ringförmige Wandung 42 kann beispielsweise materialschlüssig mit dem Bodenelement 18 verbunden sein. Es ist auch möglich, dass die ringförmige Wandung 42 einstückig mit dem Bodenelement 18, insbesondere aus dem gleichen (kunststoff-)Material, ausgebildet ist.

Insbesondere unter Bezugnahme auf die Fig. 1 ist bei A) ersichtlich, dass die Ansaugöffnung 26 im Deckelelement bezogen auf eine Fahrzeugbreite (in Y-Richtung) im Wesentlichen mittig im Bereich Längsmittelachse MA angeordnet ist. Die Zugangsöffnung 34 ist angrenzend an die Ansaugöffnung 26 ausgebildet, wobei zwischen der Ansaugöffnung 26 und der Zugangsöffnung 34 ein Abstandabschnitt 20a des Deckelelements 20 ausgebildet ist, der bezogen auf die Fahrzeugbreitenrichtung Y eine Ausdehnung von weniger als 20cm, insbesondere weniger als 5cm aufweist. Die Ausdehnung des Abstandabschnitts 20a kann auch weinige Millimeter bis wenige Zentimeter betragen, beispielsweise 0,5cm bis 3 cm.

Aus der Fig. 2 ist bei A) noch ersichtlich, dass ein Füllstützen 50 ein ansonsten nicht dargestellten Befüllvorrichtung mit dem Einfüllabschnitt 32 bzw. der Einfüllöffnung 40 oder einem Einfülladapter koppelbar oder gekoppelt ist. Hierdurch kann der Fluidbehälter 30 mit einem entsprechenden Fluid befüllt werden, beispielsweise einer Kühlflüssigkeit oder einer Bremsflüssigkeit.

Ferner wird unter Bezugnahme auf die Fig. 1 und 2 darauf hingewiesen, dass jeweils bei B) eine Luftansaugung 60 für eine Klimatisierungseinheit des Kraftfahrzeugs 10 gezeigt ist. Frischluft FL, die durch die Ansaugöffnung im Deckelelement 18 durch den Ansaugraum 22 strömt dabei um die Wandabschnitte 18w und die ringförmige Wandung 40 zu der Luftansaugung 60.

Bezugnehmend auf die Fig. 3 wird noch darauf hingewiesen, dass der dort dargestellte Fluidbehälter 30 rein beispielshaft ist und auch eine andere Form bzw. ein größeres Volumen aufweisen kann.

## Patentansprüche

1. Kraftfahrzeug (10) mit einem verbrennungsmotorischen oder/und elektrischen Antrieb, wobei das Kraftfahrzeug aufweist:
- eine Windschutzscheibe (12);
- einen vor der Windschutzscheibe (12) angeordneten Wasserkasten (16), der dazu eingerichtet ist, in einem Übergangsbereich von der Windschutzscheibe (12) und einer Fronthaube anfallendes Wasser aufzufangen und abzuleiten;
wobei der Wasserkasten (16) ein Bodenelement (18) und ein Deckelelement (20) aufweist, die einen Ansaugraum (22) für Frischluft (FL) bilden;
wobei das Deckelelement (20) oder/und das Bodenelement (18) eine entlang der Windschutzscheibe (12) verlaufende Schwallwand (24) aufweist oder anteilig bildet mit einem zur Windschutzscheibe (12) zugewandten Schwallwandkanal zur Ableitung von Wasser zu beiden Seiten des Kraftfahrzeugs;
wobei in dem Deckelelement (20) eine Ansaugöffnung (26) für Frischluft (FL) ausgebildet ist, und
wobei in dem Bodenelement (18) ein Wasserauffangbecken mit einer Bodenfläche (18f) ausgebildet ist,
**dadurch gekennzeichnet, dass** unterhalb des Deckelelements (20) ein Fluidbehälter (30) mit einem in den Ansaugraum (22) des Wasserkastens (16) vorstehenden Einfüllabschnitt (32) angeordnet ist und dass in dem Deckelelement (20) eine Zugangsöffnung (34) zu dem Einfüllabschnitt (32) des Fluidbehälters (30) ausgebildet ist.

2. Kraftfahrzeug (10) nach Anspruch 1, **dadurch gekennzeichnet, dass** der Fluidbehälter (30) an einer Oberseite des Einfüllabschnitts (32) eine Einfüllöffnung (40) oder einen Einfülladapter aufweist, die bzw. der durch die Zugangsöffnung (34) des Deckelelements (20) hindurch erreichbar ist.

3. Kraftfahrzeug (10) nach Anspruch 1 oder 2, **dadurch gekennzeichnet, dass** das Bodenelement (18) im Bereich des Einfüllabschnitts (32) Wandabschnitte (18w) aufweist, die den Einfüllabschnitt (32) zumindest teilweise umgeben oder einfassen.

4. Kraftfahrzeug (10) nach Anspruch 3, **dadurch gekennzeichnet, dass** die Wandabschnitte (18w) einstückig mit dem Bodenelement (18) ausgebildet sind und eine Innenkontur bilden, die mit einer Außenkontur des Einfüllabschnitts (32) im Wesentlichen korrespondiert.

5. Kraftfahrzeug (10) nach einem der vorhergehenden Ansprüche,
**dadurch gekennzeichnet, dass** die Zugangsöffnung (34) durch ein abnehmbares Abdeckelement (36) verschließbar ist.

6. Kraftfahrzeug (10) nach einem der vorhergehenden Ansprüche,
**dadurch gekennzeichnet**, zwischen dem Bodenelement (18), insbesondere den Wandabschnitten (18w), und dem Deckelelement (20) eine im Wesentlichen ringförmige Wandung (42) ausgebildet ist, derart, dass den Ansaugraum (22) durchströmende Luft zwischen dem Bodenelement (18) und dem Deckelelement (20) um die ringförmig Wandung (42) geleitet wird.

7. Kraftfahrzeug (10) nach Anspruch 6, **dadurch gekennzeichnet, dass** die ringförmige Wandung (42) in Bezug auf ihr Material oder/und in Bezug auf ihre Wandstärke nachgiebig ausgebildet ist.

8. Kraftfahrzeug (10) nach Anspruch 6 oder 7, **dadurch gekennzeichnet, dass** die ringförmige Wandung (42) materialschlüssig mit dem Bodenelement (18) verbunden ist oder einstückig mit diesem ausgebildet ist.

9. Kraftfahrzeug (10) nach einem der vorhergehenden Ansprüche,
**dadurch gekennzeichnet, dass** die Ansaugöffnung (26) im Deckelelement (20) bezogen auf eine Fahrzeugbreite im Wesentlichen mittig angeordnet ist und dass die Zugangsöffnung (34) angrenzend an die Ansaugöffnung (26) ausgebildet ist, wobei zwischen der Ansaugöffnung (26) und der Zugangsöffnung (34) ein Abstandabschnitt (20w) des Deckelelements (20) ausgebildet ist, der bezogen auf eine Fahrzeugbreitenrichtung (Y) eine Ausdehnung von weniger als 20cm, insbesondere weniger als 5cm aufweist.
